(19) Europäisches Patentamt
European Patent Office
Office européen des brevets

(11) Publication number: **0 287 618 B1**

(12) # EUROPEAN PATENT SPECIFICATION

(45) Date of publication of patent specification: **09.12.92**

(51) Int. Cl.5: **C07F 9/09**, C10M 137/06, C10M 173/00, C10L 1/26

(21) Application number: **87906974.8**

(22) Date of filing: **13.10.87**

(86) International application number: **PCT/US87/02614**

(87) International publication number: **WO 88/03144 (05.05.88 88/10)**

(54) **OIL-SOLUBLE METAL SALTS OF PHOSPHORIC ACID ESTERS.**

(30) Priority: **21.10.86 US 921939**

(43) Date of publication of application: **26.10.88 Bulletin 88/43**

(45) Publication of the grant of the patent: **09.12.92 Bulletin 92/50**

(84) Designated Contracting States: **AT BE CH DE FR GB IT LI LU NL SE**

(56) References cited:
**US-A- 2 409 774**
**US-A- 3 585 087**
**US-A- 4 085 053**
**US-A- 4 113 634**

(73) Proprietor: **The Lubrizol Corporation
29400 Lakeland Boulevard
Wickliffe, Ohio 44092(US)**

(72) Inventor: **RIZVI, Syed, O., A.
7910 Viewmount Drive
Painesville, OH 44077(US)**
Inventor: **DI BIASE, Stephen, A.
504 East 266th Street
Euclid, OH 44132(US)**

(74) Representative: **Crisp, David Norman et al
D. YOUNG & CO. 10 Staple Inn
London, WC1V 7RD(GB)**

EP 0 287 618 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to the preparation of oil-soluble, metal-containing compositions for an oil of lubricating viscosity and to the use of such compositions in lubricants, fuels, functional fluids and aqueous systems. More particularly, the present invention relates to functional fluid compositions which comprise metal salts of an alkyl phosphoric acid esters.

U.S. Patent 4,514,312 (Root, et al., April 30, 1985) in brief comprises a major proportion of a lubricating oil base grease, especially a low-sulfur lubricating oil base grease and a minor proportion of an additive system consisting essentially of a mixture of an oil-soluble, sulfur-free organic compound and an oil-insoluble, sulfur-free inorganic compound. The oil-insoluble, sulfur-free inorganic compound component of the additive system employed can be any of the oil-insoluble, alkali metal or alkaline earth metal salts of a phosphorus acid and mixtures thereof.

In U.S. Patent 2,409,774 (Mack, et al., October 22, 1946) phosphoric acid ester salts of polyvalent metals are prepared for use as siccatives in drying oil preparations, lacquers and varnishes, as bodying agents for lubricating oils or greases and as fungicides for admixture to paints or for the impregnation of cloth. The polyvalent metals are selected from lead, manganese, zinc and cobalt. Other polyvalent metals are aluminum, calcium, cerium, copper, iron, vanadium, mercury, chromium, and nickel. The latter group of metals are less efficient as siccatives.

In U.S. Patent 2,416,985 (Farrington, et al., March 4, 1947), the dispersion of polyvalent metal salts of substituted oxyacids of phosphorus in hydrocarbon oils, such as mineral lubricating oil, imparts new, unpredictable and highly desired properties to the composition. These new properties render the compounded oil particularly useful for various purposes. The principal advantages of the compounded oils of this invention lie in the increased resistance to deterioration at high temperatures.

This invention is directed towards the preparation of novel, metal-containing compositions and to the use of such compositions in lubricants, fuels, functional fluids and aqueous systems. These compositions have utility as high torque extreme pressure agents.

In accordance with the invention there is provided a method of preparing an oil-soluble, metal-containing high torque, extreme pressure agent for a lubricating composition which comprises reacting

(A) a compound of the formula ROH, wherein R is an aliphatic group containing from 3 carbon atoms up to about 50 carbon atoms with

(B) a sulfur-free, phosphorus-containing agent to form an intermediate, and then further reacting said intermediate with

(C) an oxide or hydroxide, or a combination of an oxide and hydroxide of a metal selected from alkaline earth metals, tin, silicon, boron, zinc, molybdenum, manganese, nickel, cobalt, copper, titanium, vanadium, tungsten, zirconium and iron in the presence of

(D) a catalytically effective amount of a proton source selected from carboxylic acids containing up to 4 carbon atoms, nitrogen-containing acids, sulfur-containing acids, halogen acids, water and mixtures thereof.

Various preferred features and embodiments of the invention are described below.

The metal-containing compositions of the present invention may be prepared by reacting (A), a compound of the formula ROH, with (B), a sulfur-free, phosphorus-containing agent to form an intermediate and then further reacting the intermediate with (C), a metal-containing compound in the presence of a catalyst (D).

Mono- and di-alkyl esters of phosphoric acids and their amine salts have found use in a variety of lubricant applications. The use of metal phosphate salts in lubricant additive technology, extreme pressure anti-wear agents has been quite limited. The main reason for this appears to be difficulty in preparing oil-soluble salts. Most of the metal salt chemistry reported in the literature involves the use of either metal carbonates or a double decomposition procedure. Metal oxides have also been employed in certain instances but, besides alkaline earth metal oxides, their use has been severely limited. In selected cases, where it was possible to use metal oxides they were converted (in situ) into metal acetates by the use of acetic acid as a solvent or a co-reactant.

Due to the interest in evaluating metal salts in general and zinc salts in particular in lubricants, development of an inexpensive and easy procedure for preparing such salts was considered. During attempts to achieve this, we found that zinc salts can be easily prepared by reacting alkylphosphoric acid esters with zinc oxide using water as a promoter. In some cases use of a catalytic amount of acetic acid was also warranted to affect salt formation.

The phosphoric acid esters are usually prepared from alcohols or alkyl phenols and phosphorus pentoxide.

Reactant (A)

Reactant (A) is a compound of the formula ROH wherein R is an aliphatic group containing from 3 carbon atoms up to about 50 carbon atoms.

As used herein, the term "hydrocarbyl group" denotes a radical having a carbon atom directly attached to the remainder of the molecule and having predominantly hydrocarbon character within the context of this invention. Such groups include the following:

(1) Hydrocarbon groups; that is, aliphatic (e.g., alkyl or alkenyl), alicyclic (e.g., cycloalkyl or cycloalkenyl), aromatic, aliphatic- and alicyclic-substituted aromatic, aromatic-substituted aliphatic and alicyclic radicals, and the like, as well as cyclic radicals wherein the ring is completed through another portion of the molecule (that is, any two indicated substituents which, in the context of this invention, do not alter the predominantly hydrocarbon character of the radical. Those skilled in the art will be aware of suitable substituents; examples are halo, alkoxy, hydroxy, alkylthio, carbalkoxy, nitro and carboxyl.

Terms such as "alkyl hydrocarbon-based group," "aliphatic hydrocarbon-based group," "aryl hydrocarbon-based group" and the like have meanings analogous to the above with respect to alkyl, aliphatic and aryl groups and the like.

Preferably, the hydrocarbon-based groups in the compositions of this invention are free from acetylenic unsaturation.

The alcohols ROH which can be utilized to form the desired intermediate include well-known monohydric alcohols. These monohydric alcohols may be primary as well as secondary alcohols and also can be mixtures of primary and secondary alcohols. The alcohols can be straight-chain, branched-chain or hetero atom-containing alcohols. This latter class of alcohols is also known as functionalized alcohols.

The preferred monohydric alcohols are primary or secondary aliphatic alcohols, such as alkenols and alkanols of from about 3 to about 50 carbon atoms, preferably from about 5 to about 28 carbon atoms, and most preferably from about 5 to 8 carbon atoms. Mixtures of alcohols can be utilized provided that the total number of carbon atoms in each R group is no more than about 50 carbon atoms. More preferably, each R group is derived from a monohydric alcohol containing at least 5 carbon atoms. Suitable alcohols include for example, n-propanol, isopropanol, n-butanol, 2-butanol, 2-methylpropanol, n-pentanol, 2-pentanol, 3-pentanol, 2-methylbutanol, 3-methyl-2-pentanol, n-hexanol, 2-hexanol, 3-hexanol, 2-methyl-2-pentanol, 4-methyl-2-pentanol, 4-methyl, 3-pentanol, cyclohexanol, methylcyclohexanol, heptanol, 2-ethyl-hexanol, n-octanol, isooctanol, 2,2-dimethyl-octanol, nonanol, decanol, isodecanol, dodecanol, tetradecanol, hexadecanol, octadecanol, oleyl alcohol, linoleyl alcohol, linolenyl alcohol, phytol, myricyl alcohol, lauryl alcohol, myristyl alcohol, cetyl alcohol, stearyl alcohol, behenyl alcohol, etc.

The monohydric alcohols can also be aryl-substituted alcohols wherein an aliphatic chain has a pendant aryl group. Representative of this class of alcohols are benzyl alcohol, phenethyl alcohol, sec-phenethyl alcohol, 1-phenyl-1-propanol, 2-phenyl-1-propanol, 3-phenyl-1-propanol, 1-phenyl-2-propanol, 2-phenyl-2-propanol, diphenylcarbinol, triphenylcarbinol, and cinnamyl alcohol.

Commercial alcohols (mixtures) are contemplated herein, and these commercial alcohols may comprise minor amounts of alcohols which although not specified herein do not detract from the major purposes of this invention. Higher synthetic monohydric alcohols of the type formed by the Oxo process (e.g., 2-ethylhexyl), the aldol condensation, or by organoaluminum-catalyzed oligomerization of alpha-olefins (especially ethylene), followed by oxidation, also are useful.

Examples of some preferred monohydric alcohols and alcohol mixtures suitable for forming the compositions of the invention include commercially available "Alfol" alcohols marketed by Continental Oil Corporation. Alfol 810 is a mixture containing alcohols consisting essentially of straight chain, primary alcohols having from 8 to 10 carbon atoms. The Alfol 20+ alcohols are mixtures of $C_{18}$-$C_{28}$ primary alcohols having mostly, on an alcohol basis, $C_{20}$ alcohols as determined by GLC (gas-liquid-chromatography). The Alfol 22+ alcohols are $C_{18}$-$C_{28}$ primary alcohols having mostly, on an alcohol basis, $C_{22}$ alcohols. These Alfol alcohols can contain a fairly large percentage (up to 40 percent by weight) of paraffinic compounds which can be removed before the esterification reaction if desired.

Another example of a commercially available alcohol mixture is Adol 60 which comprises about 75 percent by weight of a straight chain $C_{22}$ primary alcohol, about 15 percent of a $C_{20}$ primary alcohol and about 8 percent of $C_{18}$ and $C_{24}$ alcohols. Adol 60 is marketed by Asland Chemical.

A variety of mixtures of monohydric fatty alcohols derived from naturally occurring triglycerides and ranging in chain length of from $C_8$ to $C_{18}$ are available from Procter & Gamble Company. These mixtures contain various amounts of fatty alcohols containing mainly 12, 14, 16, or 18 carbon atoms. For example, CO-1214 is a fatty alcohol mixture containing 0.5 percent of $C_{10}$ alcohol, 66.0 percent of $C_{12}$ alcohol, 26.0 percent of $C_{14}$ alcohol and 6.5 percent of $C_{16}$ alcohol.

Another group of commercially available mixtures include the "Neodol" products available from Shell Chemical Co. For example, Neodol 23 is a mixture of $C_{12}$ and $C_{15}$ alcohols; and Neodol 45 is a mixture of $C_{14}$ and $C_{15}$ alcohols.

Examples of preferred branched chain monohydric alcohols suitable for use in the present invention include, for example, commercial tridecyl alcohol corresponding in large part substantially to the formula:

$CH_3CH_2CH(CH_3)CH(CH_3)CH(CH_3)CH(CH_3)CH_2CH_2CH_2OH$

prepared by the Oxo process and which is available from Exxon Corporation, hexadecyl alcohol prepared by the Oxo process, 12-methylpentadecyl alcohol, 6-methyldecyl alcohol, 8-ethyltetradecyl alcohol, 5,6-dipropyldecyl alcohol as well as mixtures of these alcohols.

The functionalized alcohols contain hetero atoms; that is, radicals which, while predominantly hydrocarbon in character within the context of this invention, contain atoms other than carbon present in a chain or ring otherwise composed of carbon atoms. Suitable hetero atoms will be apparent to those skilled in the art and include, for example, nitrogen, oxygen, phosphorus and sulfur.

Alcohols wherein the R group contains a hetero moiety are exemplified by the following: 4-morpholineethanol, 2-pyridineethanol, pyridinemethanol, 1-pyrrolidineethanol, pyrrolidinemethanol, hydroxyethylacrylate, hydroxymethylacrylamide, hydroxyethylacrylamide, hydroxyethylamine, and hydroxy alkyl phosphonates.

Also contemplated in this invention are glycol ethers that contain both an ether and an alcohol group in a single molecule, such as polyethoxylated and polypropoxylated alcohols. The following glycol ethers are available from Union Carbide:

| | |
|---|---|
| Methyl CELLOSOLVE | $CH_3OCH_2CH_2OH$ |
| CELLOSOLVE Solvent | $C_2H_5OCH_2CH_2OH$ |
| Butyl CELLOSOLVE | $C_4H_9OCH_2CH_2OH$ |
| Hexyl CELLOSOLVE | $C_6H_{13}OCH_2CH_2OH$ |
| Methyl CARBITOL | $CH_3OCH_2CH_2CCH_2CH_2OH$ |
| CARBITOL Solvent | $C_2H_5OCH_2CH_2OCH_2CH_2OH$ |
| Butyl CARBITOL | $C_4H_9OCH_2CH_2OCH_2CH_2OH$ |
| Hexyl CARBITOL | $C_6H_{13}OCH_2CH_2OCH_2CH_2OH$ |
| UCAR Solvent LM | $CH_3OCH_2CH(CH_3)OH$ |
| UCAR Solvent 2LM | $CH_3OCH_2CH(CH_3)OCH_2CH(CH_3)OH$ |
| Methoxytriglycol | $CH_3OCH_2CH_2OCH_2CH_2OCH_2CH_2OH$ |
| Ethoxytriglycol | $C_2H_5OCH_2CH_2OCH_2CH_2OCH_2CH_2OH$ |
| Butoxytriglycol | $C_4H_9OCH_2CH_2OCH_2CH_2OCH_2CH_2OH$ |
| 1-Butoxyethoxy-2-propanol | $C_4H_9OCH_2CH_2OCH_2CH(CH_3)OH$ |
| PROPASOL Solvent B | $C_4H_9OCH_2CH(CH_3)OH$ |
| PROPASOL Solvent P | $C_3H_7OCH_2CH(CH_3)OH$ |

Ethoxylated nonyl phenols are also contemplated in the practice of this invention. A preferred class of compounds is the Tergitols available from Union Carbide having the following structure

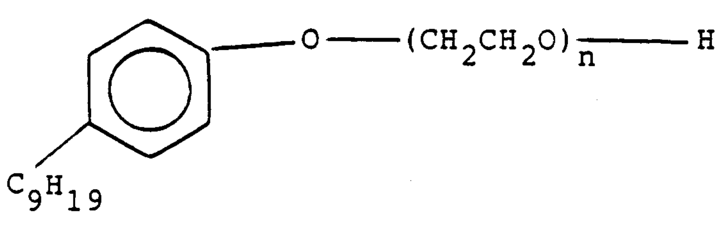

where n is from 4 to 13.

Reactant (B)

Reactant (B) is a sulfur-free, phosphorus-containing agent which is preferably selected from phosphorus

pentoxide, phosphorus halides, phosphorus oxyhalide, elemental phosphorus and mixtures thereof.

When elemental phosphorus or phosphorus halides are employed, it is desirable to have present an oxidation source such as oxygen or air.

The preferred phosphorus halides employed are either phosphorus trichloride or phosphorus pentachloride. The preferred phosphorus oxyhalide is phosphorus oxychloride.

An intermediate is formed by reacting Reactants (A) and (B) together. Conveniently, reactant (A) is charged to a flask and Reactant (B) is added therein. The temperature of the mixture can be from about 20° centigrade up to the boiling point of Reactant (A), or any solvent or diluent that may be employed. A reaction occurs immediately as evidenced by an increase in temperature. The intermediate thus formed is a mixture of products:

The molar ratio of Reactant (A) to Reactant (B) is generally from 1 to 0.5 up to 5:1. A preferred ratio is 3:1.

Reactant (C)

Reactant (C) is a metal-containing compound. The metal-containing compound is employed as either an oxide, hydroxide or a combination of both. Metal-containing compounds that can be used in this invention are alkaline earth metals, tin, silicon, boron, zinc, molybdenum, manganese, nickel, cobalt, copper, titanium, vanadium, tungsten, zirconium and iron.

The alkaline earth metals of interest are magnesium, calcium, strontium or barium.

Reactant (D)

A catalyst, Reactant (D) is used in forming the desired products of this invention by the reaction of the intermediate with Reactant (C). The catalyst of this invention is a proton donor. The following proton donors have utility in this invention: water; halogen acids, such as hydrochloric acid; nitrogen-containing acids, such as nitric acid;

sulfur-containing acids, such as sulfuric acid and sulfurous acid; and carboxylic acids containing up to 4 carbon atoms, such as formic acid, acetic acid and propionic acid.

The products of this invention are formed by reacting the intermediate with Reactant (C) preferably wherein there is about 1 equivalent of phosphorus to 0.25-2 equivalents of Reactant (C). For the purposes of this invention, an equivalent of phosphorus is calculated as follows:

$$\text{One equivalent weight of phosphorus} = \frac{56,100}{\text{neutralization No. to bromophenol blue}}$$

Also, for the purposes of this invention, one equivalent of a metal is equal to the molecular weight of that metal divided by the valence of the metal ion. Magnesium has an equivalent weight of 12 (24 divided by 2).

The intermediate is added to a reaction flask along with diluent oil and/or solvent, the catalyst (D) and Reactant (C). The contents are heated to a sufficient temperature to induce reaction. When the reaction is complete, water and other volatile components are removed by distillation. The contents are filtered to give the desired product.

The reactions of this invention may be carried out in the presence of a substantially inert liquid solvent/diluent medium. This solvent/diluent medium desirably serves to maintain contact of the reactants and facilitates control of the reaction temperature. Examples of suitable solvent/diluent media include aliphatic and aromatic hydrocarbons as benzene, toluene, naphtha, mineral oil, hexane; chlorinated hydrocarbons as dichlorobenzene, and heptylchloride; ethers as methyl n-amylether, n-butylether.

As used in the specification and the appended claims, the term "substantially inert" when used to refer to solvents/diluents, and the like, is intended to mean that the solvent/diluent, etc., is sufficiently inert to chemical or physical change under the conditions in which it is used. In addition, it should not materially interfere in an adverse manner with the preparation, storage, blending and/or functioning of the compositions, additive, compound, etc., in the context of the invention's intended use. For example, small amounts of a solvent/diluent, etc., can undergo minimal reaction or degradation without preventing the making and using of the invention as described herein. In other words, such reaction or degradation, while technically discernible, would not be sufficient to deter the practical worker of ordinary skill in the art from making and using the invention for its intended purposes. "Substantially inert" as used herein is, thus, readily

understood and appreciated by those of ordinary skill in the art.

As used in the specification and the appended claims, the term "solvent/diluent medium" is intended to include those solvent/diluent media in which each of the reactants are independently soluble or stably dispersible. The term "stably dispersible" as used in the specification and the appended claims is intended to mean a composition (e.g., a single compound, a mixture of two or more compounds, etc.) capable of being dispersed in a given medium to an extent which allows it to function in its intended manner. Thus, for example, where a composition is prepared by a reaction in an oil, it is sufficient that the reactants be capable of being suspended in the oil in a manner sufficient to allow the reaction to occur and the formation of the composition. Thus, the term "solvent/diluent medium" is understood and can be used in a conventional manner by those of ordinary skill in the art.

The compositions of this invention may be used as a lubricant additive. However, the compositions sometimes may be accompanied by the formation of by-products and/or excess solvent/diluent medium which may lessen its commercial appeal. Accordingly, these undesirable by-product and/or excess of undesired solvent/diluent medium can be separated from the compositions of this invention by techniques known in the art; e.g., filtration, evaporation (e.g., stripping), etc., to obtain a more desirable product. Alternatively, if the solvent/diluent medium is, for example, a lubricant base suitable for use in the lubricating compositions of this invention, the product can be left in the solvent/diluent medium and used to form the lubricating compositions as described below.

The following examples illustrate the preparation of the metal salts of the substituted phosphoric acid compositions which are useful in the present invention. Unless otherwise indicated in the following examples and elsewhere in the specification and claims, all parts and percentages are by weight, and all temperatures are in degrees centigrade.

Example 1

Iso-octyl alcohol (2340 parts, 18 moles) is charged to a 5-liter, 4-neck flask that is fitted with a stirrer, thermowell and a reflux condenser. Stirring is begun and 852 parts phosphorus pentoxide (6 moles) is added beginning at room temperature over a period of 3 hours. The addition is such that the temperature does not exceed 65 ° C. After addition is complete the contents are heated to 90 ° C and maintained at that temperature for 3 hours. 30 parts of a siliceous filter aid is added, and the contents of the flask are filtered. The filtrate has a % phosphorus content of 12.4, an acid neutralization number to bromophenol blue of 192 and an acid neutralization number to phenolphthalein of 290.

Example 2

The same procedure as Example 1 is followed except that 1224 parts (12.0 moles) of 4-methyl-2-amyl alcohol and 569 phosphorus pentoxide (4 moles) are employed. The product obtained has a neutralization number to bromophenol blue of 235 and a neutralization number to phenolphthalein of 318.

Example 3

The procedure of Example 1 is followed except that 216 parts isopropyl alcohol (3.6 moles), 551 parts 4-methyl-2-amyl alcohol (5.4 moles) and 426 parts phosphorus pentoxide (3 moles) are employed. The product obtained has a % phosphorus of 13.6, an acid neutralization number to bromophenol blue of 185 and an acid neutralization number to phenolphthalein of 369.

Example 4

The procedure of Example 1 is followed except that 780 parts 2-ethylhexanol (6 moles) and 284 parts phosphorus pentoxide (2 moles) are employed. The product obtained has a % phosphorus of 12.4, an acid neutralization number to bromophenol blue of 200 and an acid neutralization number to phenolphthalein of 308.

Example 5

The procedure of Example 1 is followed except that 311 parts of 2,2,4-trimethyl-1-pentanol (2.39 moles) and 114 parts phosphorus pentoxide (0.8 moles) are employed. The product obtained has an acid neutralization number to bromophenol blue of 215 and an acid neutralization number to phenolphthalein of

265.

Example 6

The procedure of Example 1 is followed except that 500 parts isooctyl alcohol (3.85 moles), 500 parts Alfol 810 (3.47 parts) and 350 parts phosphorus pentoxide (2.44 moles) are employed. The product obtained has an acid neutralization number to bromophenol blue of 204 and an acid neutralization number to phenolphthalein of 278.

The following examples exemplify the reaction of the intermediate with component (C).

Example 7

Charged to a 2-liter, 4-neck flask is 278 parts of the material obtained from Example 1 (1 equivalent), 200 parts toluene, 130 parts mineral oil, 1 part acetic acid in 10 parts water, and 45 parts zinc oxide (0.55 equivalents). The contents are heated to 60-70 °C and held for 2 hours by which time all the zinc oxide goes into solution. Volatiles are vacuum stripped to 120 °C and 4 kPa (30 torr). The contents are filtered using a siliceous filter aid. Analyses: % zinc 8.68, % phosphorus 7.03.

Example 8

Charged to a 1-liter, 4-neck flask is 268 parts of the material from Example 1 (1 equivalent), 170 parts toluene, 130 parts mineral oil, 1 part acetic acid in 10 parts water and 24 parts magnesium oxide (0.6 equivalents). The contents are stirred and heated to 60 °C for 2 hours while maintaining a reflux and removing water through a Dean Stark trap. The contents are then vacuum stripped to 130 °C at 2.7 kPa (20 torr) and filtered using a siliceous filter aid. Analyses: % magnesium 2.52, % phosphorus 5.93.

Example 9

Charged to a 2-liter, 4-neck flask are 478 parts of the material from Example 2 (2 equivalents), 361 parts mineral oil, 400 parts toluene, 2 parts acetic acid in 20 parts water and 82 parts zinc oxide (2 equivalents). The contents are stirred and heated to 60 °C and held at this temperature for about 3 hours. The contents are then vacuum stripped to 70 °C to 2.7 kPa (20 torr) and filtered using a siliceous filter aid. The analyses are: % zinc 7.2, % phosphorus 6.55.

Example 10

Charged to a 1-liter, 4-neck flask are 303 parts of the material from Example 3 (1 equivalent), 200 parts toluene, 144 parts diluent oil, 1 part acetic acid in 10 parts water and 45 parts zinc oxide (1.1 equivalent). The contents are stirred and heated to 60-70 °C and held for 2 hours. The contents are then stripped to 70 °C at 2.7 kPa (20 torr) and filtered using a siliceous filter aid. The analyses are: % zinc 9.07, % phosphorus 9.79.

Example 11

Charged to a 2-liter, 4-neck flask are 560 parts of the material from Example 4 (2 equivalents), 156 parts mineral oil, 200 parts toluene and 90.2 parts zinc oxide (2.2 equivalents). The contents are heated to 60 °C with stirring and later to reflux to remove water by azeotropic distillation. The contents are stripped to 100 °C at 3.3 kPa (25 millimeters of mercury) and filtered using a siliceous filter aid. The analyses are % zinc 9.14, % phosphorus 7.99.

Example 12

Charged to a 2-liter, 4-neck flask are 421 parts of the material from Example 5 (1.61 equivalents), 250 parts toluene, 121 parts mineral oil and 75 parts zinc oxide (1.82 equivalents). Stirring and heating is begun and 2 parts acetic acid in 20 parts water is added, and the temperature is increased to 70 °C and held at 6 hours. The contents are vacuum stripped to 110 °C at 4 kPa (30 torr) and filtered using a siliceous filter aid. The elemental analyses are % zinc 10.6, % phosphorus 8.39.

Example 13

Charged to a 3-liter, 4-neck flask are 550 parts of the material from Example 6 (2 equivalents), 400 parts toluene, 264 parts diluent oil, 84 parts zinc oxide (2 equivalents) and 2 parts acetic acid in 20 parts water. Stirring and heating is begun and the contents are heated to 60 °C and held at this temperature until all the zinc oxide is reacted. The contents are vacuum stripped to 130 °C at 4.7 kPa (35 torr) and filtered using a siliceous filter aid. The analyses are % zinc 7.6, % phosphorus 6.9.

As previously indicated, the oil-soluble, metal-containing compositions of this invention are useful as additives for lubricants. They are particularly useful as oxidation inhibitors, corrosion inhibitors, rust inhibitors, and extreme pressure anti-wear agents in gear and bearing lubricants. They can be employed in a variety of lubricants based on diverse oils of lubricating viscosity, including natural and synthetic lubricating and grease oils and mixtures thereof. These lubricants include crankcase lubricating oils for spark-ignited and compression-ignited internal combustion engines, including automobile and truck engines, two-cycle engines, aviation piston engines, marine and railroad diesel engines, and the like. They can also be used in gas engines, stationary power engines and turbines and the like. Also automatic transmission fluids, transaxle lubricants, gear lubricants, metal-working lubricants, hydraulic fluids and other lubricating oil, grease compositions and aqueous systems can also benefit from the incorporation of the subject additive.

Natural oils include animal oils and vegetable oils (e.g., castor, lard oil), liquid petroleum oils and hydrorefined, solvent-treated or acid-treated mineral lubricating oils of the paraffinic, naphthenic and mixed paraffinic-naphthenic types. Oils of lubricating viscosity derived from coal or shale are also useful base oils.

Synthetic lubricating oils include hydrocarbon oils and halo-substituted hydrocarbon oils such as polymerized and interpolymerized olefins [e.g., polybutylenes, polypropylenes, propylene-isobutylene copolymers, chlorinated polybutylenes, poly(1-hexenes), poly(1-octenes), poly(1-decenes)]; alkylbenzenes (e.g., dodecylbenzenes, tetradecylbenzenes, dinonylbenzenes, di(2-ethylhexyl) benzenes]; polyphenyls (e.g., biphenyls, terphenyls, alkylated polyphenyls); and alkylated diphenyl ethers and alkylated diphenyl sulfides and the derivatives, analogs and homologs thereof.

Alkylene oxide polymers and interpolymers and derivatives thereof where the terminal hydroxyl groups have been modified by esterification, etherification, etc., constitute another class of known synthetic lubricating oils. These are exemplified by polyoxyalkylene polymers prepared by polymerization of ethylene oxide or propylene oxide, the alkyl and aryl ethers of these polyoxyalkylene polymers (e.g., methyl-polyisopropylene glycol ether having an average molecular weight of 1000, diphenyl ether of polyethylene glycol having a molecular weight of 500-1000, diethyl ether of polypropylene glycol having a molecular weight of 1000-1500); and mono- and polycarboxylic esters thereof, for example, the acetic acid esters, mixed $C_3$-$C_8$ fatty acid esters and $C_{13}$ Oxo acid diester of tetraethylene glycol.

Another suitable class of synthetic lubricating oils comprises the esters of dicarboxylic acids (e.g., phthalic acid, succinic acid, alkyl succinic acids and alkenyl succinic acids, maleic acid, azelaic acid, suberic acid, sebacic acid, fumaric acid, adipic acid, linoleic acid dimer, malonic acid, alkylmalonic acids, alkenyl malonic acids) with a variety of alcohols (e.g., butyl alcohol, hexyl alcohol, dodecyl alcohol, 2-ethylhexyl alcohol, ethylene glycol, diethylene glycol monoether, propylene glycol). Specific examples of these esters include dibutyl adipate, di(2-ethylhexyl) sebacate, di-n-hexyl fumarate, dioctyl sebacate, diisooctyl azelate, diisodecyl azelate, dioctyl phthalate, didecyl phthalate, dieicosyl sebacate, the 2-ethylhexyl diester of linoleic acid dimer, and the complex ester formed by reacting one mole of sebacic acid with two moles of tetraethylene glycol and two moles of 2-ethylhexanoic acid.

Esters useful as synthetic oils also include those made from $C_5$ to $C_{12}$ monocarboxylic acids and polyols and polyol ethers such as neopentyl glycol, trimethylolpropane, pentaerythritol, dipentaerythritol and tripentaerythritol.

Silicon-based oils such as the polyalkyl-, polyaryl-, polyalkoxy-, or polyaryloxysiloxane oils and silicate oils comprise another useful class of synthetic lubricants; they include tetraethyl silicate, tetraisopropyl silicate, tetra-(2-ethylhexyl) silicate, tetra-(4-methyl-2-ethylhexyl) silicate, tetra-(p-tert-butylphenyl) silicate, hexa-(4-methyl-2-pentoxy)disiloxane, poly(methyl)siloxanes and poly(methylphenyl) siloxanes. Other synthetic lubricating oils include liquid esters of phosphorus-containing acids (e.g., tricresyl phosphate, trioctyl phosphate, diethyl ester of decylphosphonic acid) and polymeric tetrahydrofurans.

Unrefined, refined and rerefined oils can be used in the lubricants of the present invention. Unrefined oils are those obtained directly from a natural or synthetic source without further purification treatment. For example, a shale oil obtained directly from retorting operations, a petroleum oil obtained directly from distillation or ester oil obtained directly from an esterification process and used without further treatment would be an unrefined oil. Refined oils are similar to the unrefined oils except they have been further

treated in one or more purification steps to improve one or more properties. Many such purification techniques, such as distillation, solvent extraction, acid or base extraction, filtration and percolation are known to those skilled in the art. Rerefined oils are obtained by processes similar to those used to obtain refined oils applied to refined oils which have been already used in service. Such rerefined oils are also known as reclaimed or reprocessed oils and often are additionally processed by techniques for removal of spent additives and oil breakdown products.

Generally the lubricants of the present invention contain an amount of the oil-soluble, metal-containing compositions of this invention sufficient to inhibit oxidation, corrosion, rust and improve extreme pressure anti-wear properties. Normally the amount employed will be about 0.05% to about 20%, preferably about 0.1% to about 10% of the total weight of the lubricating composition. This amount is exclusive of any included solvent/diluent medium. In lubricating compositions operated under extremely adverse conditions, such as lubricating compositions for marine diesel engines, the metal salts of this invention may be present in amounts of up to about 30% by weight, or more, of the total weight of the lubricating composition.

The term "minor amount" as used in the specification and appended claims is intended to mean that when a composition contains a "minor amount" of a specific material that amount is less than 50 percent by weight of the composition.

The term "major amount" as used in the specification and appended claims is intended to mean that when a composition contains a "major amount" of a specific material that amount is more than 50 percent by weight of the composition.

The invention also contemplates the use of other additives in combination with the compositions of this invention. Such additives include, for example, detergents and dispersants of the ash-producing or ashless type, corrosion- and oxidation-inhibiting agents, pour point depressing agents, extreme pressure agents, antiwear agents, color stabilizers and anti-foam agents.

The ash-producing detergents are exemplified by oil-soluble neutral and basic salts of alkali or alkaline earth metals with sulfonic acids, carboxylic acids, or organic phosphorus acids characterized by at least one direct carbon-to-phosphorus linkage such as those prepared by the treatment of an olefin polymer (e.g., polyisobutene having a molecular weight of 1000) with a phosphorizing agent such as phosphorus trichloride, phosphorus heptasulfide, phosphorus pentasulfide, phosphorus trichloride and sulfur, white phosphorus and a sulfur halide, or phosphorothioic chloride. The most commonly used salts of such acids are those of sodium, potassium, lithium, calcium, magnesium, strontium and barium.

The term "basic salt" is used to designate metal salts wherein the metal is present in stoichiometrically larger amounts than the organic acid radical. The commonly employed methods for preparing the basic salts involve heating a mineral oil solution of an acid with an excess of a metal neutralizing agent such as the metal oxide, hydroxide, carbonate, bicarbonate, or sulfide at a temperature about 50°C. The use of a "promoter" in the neutralization step to aid the incorporation of a large excess of metal likewise is known. Examples of compound useful as the promoter include phenolic substances such as phenol, naphthol, alkylphenol, thiophenol, sulfurized alkylphenol, and condensation products of formaldehyde with a phenolic substance; alcohols such as methanol, 2-propanol, octyl alcohol, cellosolve, carbitol, ethylene glycol, stearyl alcohol, and cyclohexyl alcohol; and amines such as aniline, phenylenediamine, phenothiazine, phenylnaphthylamine, and dodecylamine. A particularly effective method for preparing the basic salts comprises mixing an acid with an excess of a basic alkaline earth metal neutralizing agent and at least one alcohol promoter, and carbonating the mixture at an elevated temperature such as 60-200°C.

Ashless detergents and dispersants are so called despite the fact that, depending on its constitution, the dispersant may upon combustion yield a non-volatile material such as boric oxide or phosphorus pentoxide; however, it does not ordinarily contain metal and therefore does not yield a metal-containing ash on combustion. Many types are known in the art, and any of them are suitable for use in the lubricant compositions of this invention. The following are illustrative:

(1) Reaction products of carboxylic acids (or derivatives thereof) containing at least about 34 and preferably at least about 54 atoms with nitrogen containing compounds such as amine, organic hydroxy compounds such as phenols and alcohols, and/or basic inorganic materials. Examples of these "carboxylic dispersants" are described in British Patent 1,306,529 and in many U.S. patents including the following:

| | | |
|---|---|---|
| 3,163,603 | 3,351,552 | 3,541,012 |
| 3,184,474 | 3,381,022 | 3,543,678 |
| 3,215,707 | 3,399,141 | 3,542,680 |
| 3,219,666 | 3,415,750 | 3,567,637 |
| 3,271,310 | 3,433,744 | 3,574,101 |
| 3,272,746 | 3,444,170 | 3,576,743 |
| 3,281,357 | 3,448,048 | 3,630,904 |
| 3,306,908 | 3,448,049 | 3,632,510 |
| 3,311,558 | 3,451,933 | 3,632,511 |
| 3,316,177 | 3,454,607 | 3,697,428 |
| 3,340,281 | 3,467,668 | 3,725,441 |
| 3,341,542 | 3,501,405 | 4,234,435 |
| 3,346,493 | 3,522,179 | Re 26,433 |

(2) Reaction products of relatively high molecular weight aliphatic or alicyclic halides with amines, preferably polyalkylene polyamines. These may be characterized as "amine dispersants" and examples thereof are described for example, in the following U.S. patents:

3,275,554; 3,454,555; 3,438,757 and 3,565,804.

(3) Reaction products of alkyl phenols in which the alkyl group contains at least about 30 carbon atoms with aldehydes (especially formaldehyde) and amines (especially polyalkylene polyamines), which may be characterized as "Mannich dispersants". The materials described in the following U.S. patents are illustrative:

| | | |
|---|---|---|
| 2,459,112 | 3,442,808 | 3,591,598 |
| 2,962,442 | 3,448,047 | 3,600,372 |
| 2,984,550 | 3,545,497 | 3,634,515 |
| 3,036,003 | 3,459,661 | 3,649,229 |
| 3,166,516 | 3,461,172 | 3,697,574 |
| 3,236,770 | 3,493,520 | 3,725,277 |
| 3,355,270 | 3,539,633 | 3,725,480 |
| 3,368,972 | 3,558,743 | 3,726,882 |
| 3,413,347 | 3,586,629 | 3,980,569 |

(4) Products obtained by post-treating the carboxylic, amine or Mannich dispersants with such reagents as urea, thiourea, carbon disulfide, aldehydes, ketones, carboxylic acids, hydrocarbon-substituted succinic anhydrides, nitriles, epoxides, boron compounds, phosphorus compounds or the like. Exemplary materials of this kind are described in the following U.S. patents:

| | | | |
|---|---|---|---|
| 3,036,003 | 3,282,955 | 3,493,520 | 3,639,242 |
| 3,087,936 | 3,312,619 | 3,502,677 | 3,649,229 |
| 3,200,107 | 3,366,569 | 3,513,093 | 3,649,659 |
| 3,216,936 | 3,367,943 | 3,533,945 | 3,658,836 |
| 3,254,025 | 3,373,111 | 3,539,633 | 3,697,574 |
| 3,256,185 | 3,403,102 | 3,573,010 | 3,702,757 |
| 3,278,550 | 3,442,808 | 3,579,450 | 3,703,536 |
| 3,280,234 | 3,455,831 | 3,591,598 | 3,704,308 |
| 3,281,428 | 3,455,832 | 3,600,372 | 3,708,422 |

(5) Interpolymers of oil-solubilizing monomers such as decyl methacrylate, vinyl decyl ether and high molecular weight olefins with monomers containing polar substituents, e.g., aminoalkyl acrylates or acrylamides and poly-(oxyethylene)-substituted acrylates. These may be characterized as "polymeric dispersants" and examples thereof are disclosed in the following U.S. patents:

3,329,658; 3,366,730; 3,449,250; 3,687,849; 3,519,565 and 3,702,300.

Extreme pressure agents and corrosion- and oxidation-inhibiting agents which may be included in this invention are exemplified by chlorinated aliphatic hydrocarbons such as chlorinated wax; organic sulfides

and polysulfides such as benzyl disulfide, bis(chlorobenzyl) disulfide, dibutyl tetrasulfide, sulfurized methyl ester of oleic acid, sulfurized alkylphenol, sulfurized dipentene, and sulfurized terpene; phosphosulfurized hydrocarbons such as the reaction product of a phosphorus sulfide with turpentine or methyl oleate, phosphorus esters including principally dihydrocarbon and trihydrocarbon phosphites such as dibutyl phosphite, diheptyl phosphite, dicyclohexyl phosphite, pentylphenyl phosphite, dipentylphenyl phosphite, tridecyl phosphite, distearyl phosphite, dimethyl napthyl phosphite, oleyl 4-pentylphenyl phosphite, polypropylene (molecular weight 500)-substituted phenyl phosphite, diisobutyl-substituted phenyl phosphite; metal thiocarbamates, such as zinc dioctyldithiocarbamate, and barium heptylphenyl dithiocarbamate; Group II metal phosphorodithioates such as zinc dicyclohexylphosphorodithioate, zinc dioctylphosphorodithioate, barium di(heptylphenyl)-phosphorodithioate, cadmium dinonylphosphorodithioate, and the zinc salt of a phosphorodithioic acid produced by the reaction of phosphorus pentasulfide with an equimolar mixture of isopropyl alcohol and n-hexyl alcohol.

The compositions of this invention can be added directly to the lubricant. Preferably, however, they are diluted with a substantially inert, normally liquid organic diluent such as mineral oil, naphtha, benzene, toluene or xylene, to form an additive concentrate. These concentrates usually contain from about 10 percent to 90 percent by weight of the composition of this invention and may contain, in addition, one or more other additives known in the art or described hereinabove.

The fuel compositions of the present invention contain a major proportion of a normally liquid fuel, usually a hydrocarbonaceous petroleum distillate fuel such as motor gasoline as defined by ASTM Specification D-439-73 and diesel fuel or fuel oil as defined by ASTM Specification D-396. Normally liquid fuel compositions comprising nonhydrocarbonaceous materials such as alcohols, ethers, organonitro compounds and the like (e.g., methanol, ethanol, diethyl ether, methyl ethyl ether, nitromethane) are also within the scope of this invention as are liquid fuels derived from vegetable or mineral sources such as corn, alfalfa, shale and coal. Normally liquid fuels which are mixtures of one or more hydrocarbonaceous fuels and one or more nonhydrocarbonaceous materials are also contemplated. Examples of such mixtures are combinations of gasoline and ethanol, and diesel fuel and ether. Particularly preferred is gasoline, that is, a mixture of hydrocarbons having an ASTM boiling point of about 60 ° C at the 10 percent distillation point to about 205 ° C at the 90 percent distillation point.

Generally, these fuel compositions contain an amount of the composition of this invention sufficient to impart friction modification and/or deposit softening properties to the fuel; usually this amount is about 0.001 to about 5 percent (based on the weight of the final composition), preferably 0.001 percent to 1.0 percent.

The fuel compositions of this invention can contain, in addition to the compositions of this invention, other additives which are well known to those of skill in the art. These can include antiknock agents such as tetraalkyl lead compounds, lead scavengers such as halo-alkanes (e.g., ethylene dichloride and ethylene dibromide), deposit preventors or modifiers such as triaryl phosphates, dyes, cetane improvers, auxiliary antioxidants such as 2,6-di-t-butyl-4-methylphenol, rust inhibitors such as alkylated succinic acids and anhydrides, bacteriostatic agents, gum inhibitors, metal deactivators, demulsifiers, upper cylinder lubricants, anti-icing agents and the like.

In certain preferred fuel compositions of the present invention, the aforedescribed compositions are combined with an ashless dispersant in gasoline. Such ashless dispersants are preferably esters of a mono- or polyol and a high molecular weight mono- or polycarboxylic acid acylating agent containing at least 30 carbon atoms in the acyl moiety. Such esters are well known to those of skill in the art. See, for example, French Patent No. 1,396,645, British Patent Nos. 981,850 and 1,055,337 and U.S. Patent Nos. 3,255,108; 3,311,558; 3,331,776; 3,346,354; 3,522,179; 3,579,450; 3,542,680; 3,381,022; 3,639,242; 3,697,428; 3,708,522; and British Patent Specification 1,306,529.
Generally, the weight ratio of the compositions of this invention to the aforesaid ashless dispersants is about 0.1 to about 10.0, preferably about 1 to about 10 parts of composition to 1 part ashless dispersant. In still another embodiment of this invention, the inventive additives are combined with Mannich condensation products formed from substituted phenols, aldehydes, polyamines, and substituted pyridines. Such condensation products are described in U.S. Patent Nos. 3,649,659; 3,558,743; 3,539,633; 3,704,308; and 3,725,277.

The compositions of this invention can be added directly to the fuel to form the fuel compositions of this invention or they can be diluted with a substantially inert, normally liquid organic solvent/diluent such as mineral oil, xylene, or a normally liquid fuel as described above, to form an additive concentrate which is then added to the fuel in sufficient amounts to form the inventive fuel composition described herein. These concentrates generally contain about 10 to 90 percent of the compositions of this invention and can contain in addition any of the above described conventional additives, particularly the aforedescribed ashless dispersants in the aforesaid proportions. The remainder of the concentrate is the solvent/diluent.

Many of the above-mentioned extreme pressure agents and corrosion- oxidation inhibitors also serve as antiwear agents. Zinc dialkylphosphorodithioates are a well known example.

Pour point depressants are a particularly useful type of additive often included in the lubricating oils described herein. The use of such pour point depressants in oil-based compositions to improve low temperature properties is well known in the art. See, for example, page 8 of "Lubricant Additives" by C.V. Smalheer and R. Kennedy Smith (Lezius-Hiles Co. publishers, Cleveland, Ohio, 1967).

Examples of useful pour point depressants are polymethacrylates, polyacrylates; polyacrylamides; condensation products of haloparaffin waxes and aromatic compounds; vinyl carboxylate polymers; and terpolymers of dialkylfumarates, vinylesters of fatty acids and alkylvinylethers. Pour point depressants useful for the purposes of this invention, techniques for their preparation and their uses are described in U.S. Patents 2,387,501; 2,015,748; 2,655,479; 1,815,022; 2,191,498; 2,666,746; 2,721,877; 2,721,878; and 3,250,715.

Anti-foam agents are used to reduce or prevent the formation of stable foam. Typical anti-foam agents include silicones or organic polymers. Additional anti-foam compositions are described in "Foam Control Agents", by Henry T. Kerner (Noyes Data Corporation, 1976), pages 125-162.

The oil-soluble, metal-containing compositions of this invention can be added directly to the lubricant. Preferably, however, they are diluted with a substantially inert, normally liquid organic diluent such as mineral oil, naphtha, benzene, toluene or xylene, to form an additive concentrate. These concentrates usually contain from about 10 to 90% by weight of the oil-soluble, metal-containing compositions of this invention and may contain, in addition, one or more other additives known in the art or described hereinabove. The remainder of the concentrate is the substantially inert normally liquid diluent.

This invention also includes aqueous compositions which are characterized by an aqueous phase. These aqueous compositions include solutions, micelle dispersions, micro emulsions, and the like. Preferably, the aqueous phase is a continuous aqueous phase. These aqueous compositions usually contain at least about 40% by weight water. Such aqueous compositions encompass both concentrates containing from about 40% to about 70% by weight, preferably from about 40% to about 65% by weight water, and water-based functional fluids containing at least about 40% by weight and generally at least about 70% by weight of water, and an effective amount of the antioxidant compositions of the invention to improve the antioxidant characteristics of said aqueous compositions. Preferably, the antioxidant composition of the invention are present in these aqueous compositions at levels in the range of from about 0.01% to about 15%, more preferably from about 0.1% to about 10% by weight, more preferably from about 0.1% to about 5% by weight of said aqueous compositions. The concentrates generally contain less than about 50% by weight, preferably less than about 25% by weight, more preferably less than about 15% by weight, and still more preferably less than about 6% by weight hydrocarbon oil. The water-based functional fluids preferably contain less than about 15% by weight, more preferably less than about 5% by weight, and more preferably less than about 2% by weight hydrocarbon oil.

These concentrates and water-based functional fluids can optionally include other conventional additives commonly employed in water-based functional fluids. These conventional additives include dispersants, solubilizers, surfactants, functional additives, corrosion-inhibitors, shear stabilizing agents, bactericides, dyes, water-softeners, odor masking agents, anti-foam agents, and the like.

The concentrates are analogous to the water-based functional fluids except that they contain less water and proportionately more of the other ingredients. The concentrates can be converted to water-based functional fluids by dilution with water. This dilution is usually done by standard mixing techniques. This is often a convenient procedure since the concentrate can be shipped to the point of use before additional water is added. Thus, the cost of shipping a substantial amount of the water in the final water-based functional fluid is saved. Only the water necessary to formulate the concentrate (which is determined primarily by ease of handling and convenience factors), need be shipped.

Generally these water-based functional fluids are made by diluting the concentrates with water, wherein the ratio of water to concentrate is usually in the range of about 80:20 to about 99:1 by weight. As can be seen when dilution is carried out within these ranges, the final water-based functional fluid contains, at most, an insignificant amount of hydrocarbyl oil.

Also included within the invention are methods for preparing aqueous compositions, including both concentrates and water-based functional fluids, containing other conventional additives commonly employed in water-based functional fluids. These methods comprise the steps of:

(1) mixing the composition of the invention with such other conventional additives either simultaneously or sequentially to form a dispersion or solution; optionally

(2) combining said dispersion or solution with water to form said aqueous concentrate; and/or

(3) diluting said dispersion or solution, or concentrate with water wherein the total amount of water used

is in the amount required to provide the desired concentration of the composition of the invention and other functional additives in said concentrates or said water-based functional fluids.

These mixing steps are carried out using conventional equipment and generally at room or slightly elevated temperatures, usually below 100 ° C and often below 50 ° C. As noted above, the concentrate can be formed and then shipped to the point of use where it is diluted with water to form the desired water-based functional fluid. In other instances the finished water-based functional fluid can be formed directly in the same equipment used to form the concentrate or the dispersion or solution.

Dispersants and/or solubilizers that are useful in preparing the aqueous compositions of the present invention include the nitro-containing, phosphorus-free carboxylic solubilizers disclosed in U.S. Patents 4,329,249; 4,368,133; 4,435,297; 4,447,348; and 4,448,703.
Briefly, these dispersants and/or solubilizers are made by reacting (I) at least one carboxylic acid acylating agent having at least one hydrocarbyl-based substituent of at least about 12 to about 500 carbon atoms with (II) at least one (a) N-(hydroxyl-substituted hydrocarbyl) amine, (b) hydroxyl-substituted poly-(hydrocarbyloxy) analog of said amine (a), or (c) mixtures of (a) and (b). Preferred acylating agents include the substituted succinic acids or anhydrides. Preferred amines include the primary, secondary and tertiary alkanol amines or mixtures thereof. These dispersant/solubilizers are preferably used at effective levels to disperse or dissolve the various additives, particularly the functional additives discussed below, in the concentrates and/or water-based functional fluids of the present invention. In a particularly preferred embodiment of the present invention, the dispersant/solubilizer is the reaction product of a polyisobutenyl-substituted succinic anhydride with diethylethanolamine or a mixture of diethylethanolamine and ethanolamine.

The surfactants that are useful can be of the cationic, anionic, nonionic or amphoteric type. Many such surfactants of each type are known to the art. See, for example, McCutcheon's "Emulsifiers & Detergents", 1981, North American Edition, published by McCutcheon Division, MC Publishing Co., Glen Rock, New Jersey, U.S.A.

Among the nonionic surfactant types are the alkylene oxide-treated products, such as ethylene oxide-treated phenols, alcohols, esters, amines and amides. Ethylene oxide/propylene oxide block copolymers are also useful nonionic surfactants. Glycerol esters and sugar esters are also known to be nonionic surfactants. A typical nonionic surfactant class useful with the present invention are the alkylene oxide-treated alkyl phenols such as the ethylene oxide alkyl phenol condensates sold by the Rohm & Haas Company. A specific example of these is Triton X-100 which contains an average of 9-10 ethylene oxide units per molecule, has an HLB value of about 13.5 and a molecular weight of about 628. Many other suitable nonionic surfactants are known; see, for example, the aforementioned McCutcheon's as well as the treatise "Non-Ionic Surfactants" edited by Martin J. Schick, M. Dekker Co., New York 1967.

As noted above, cationic, anionic and amphoteric surfactants can also be used. Generally, these are all hydrophilic surfactants. Anionic surfactants contain negatively charged polar groups while cationic surfactants contain positively charged polar groups. Amphoteric dispersants contain both types of polar groups in the same molecule. A general survey of useful surfactants is found in Kirk-Othmer Encyclopedia of Chemical Technology, Second Edition, Volume 19, page 507 et seq. (1969, John Wiley and Son, New York) and the aforementioned compilation published under the name of McCutcheon's.

Among the useful anionic surfactant types are the widely known carboxylate soaps, organo sulfates, sulfonates, sulfocarboxylic acids and their salts, and phosphates. Useful cationic surfactants include nitrogen compounds such as amine oxides and the well-known quaternary ammonium salts. Amphoteric surfactants include amino acid-type materials and similar types. Various cationic, anionic and amphoteric dispersants are available from the industry, particularly from such companies as Rohm & Haas and Union Carbide Corporation, both of America. Further information about anionic and cationic surfactants also can be found in the texts "Anionic Surfactants", Parts II and III, edited by W. M. Linfield, published by Marcel Dekker, Inc., New York, 1976 and "Cationic Surfactants", edited by E. Jungermann, Marcel Dekker, Inc., New York 1976.

These surfactants, when used, are generally employed in effective amounts to aid in the dispersal of the various additives, particularly the functional additives discussed below, in such systems.

The functional additives that can be used are typically oil-soluble, water-insoluble additives which function in conventional oil-based systems as extreme pressure agents, anti-wear agents, load-carrying agents, friction modifiers, lubricity agents, etc. They can also function as anti-slip agents, film formers and friction modifiers. As is well known, such additives can function in two or more of the above-mentioned ways; for example, extreme pressure agents often function as load-carrying agents.

The term "oil-soluble, water-insoluble functional additive" refers to a functional additive which is not soluble in water above a level of about 1 gram per 100 milliliters of water at 25 ° C, but is soluble in mineral

oil to the extent of at least 1 gram per liter at 25 ° C.

These functional additives can also include certain solid lubricants such as graphite, molybdenum disulfide and polytetrafluoroethylene and related solid polymers.

These functional additives can also include frictional polymer formers. Briefly, these are potential polymer forming materials which are dispersed in a liquid carrier at low concentration and which polymerize at rubbing or contacting surfaces to form protective polymeric films on the surfaces. The polymerizations are believed to result from the heat generated by the rubbing and, possibly, from catalytic and/or chemical action of the freshly exposed surface. A specific example of such materials is linoleic acid and ethylene glycol combinations which can form a polyester frictional polymer film. These materials are known to the art and descriptions of them are found, for example, in the journal "Wear", Volume 26, pages 369-392, and West German Published Patent Application 2,339,065.

Typically, these functional additives are known metal or amine salts of organo sulfur, phosphorus, boron or carboxylic acids which are the same as or of the same type as used in oil-based fluids. Typically, such salts are of carboxylic acids of 1 to 22 carbon atoms including both aromatic and aliphatic acids; sulfur acids such as alkyl and aromatic sulfonic acids and the like; phosphorus acids such as phosphoric acid, phosphorus acid, phosphinic acid, acid phosphate esters and analogous sulfur homologs such as the thiophosphoric and dithiophosphoric acids and related acid esters; boron acids include boric acid, acid borates and the like. Useful functional additives also include metal dithiocarbamates such as molybdenum and antimony dithiocarbamates; as well as dibutyl tin sulfide, tributyl tin oxide, phosphates and phosphites; borate amine salts, chlorinated waxes; trialkyl tin oxide, molybdenum phosphates, and chlorinated waxes.

Mainly such functional additives are known to the art. For example, descriptions of additives useful in conventional oil-based systems and in the aqueous systems of this invention are found in "Advances in Petroleum Chemistry and Refining", Volume 8, edited by John J. McKetta, Interscience Publishers, New York, 1963, pages 31-38 inclusive; Kirk-Othmer "Encyclopedia of Chemical Technology", Volume 12, Second Edition, Interscience Publishers, New York, 1967, page 575 et seq.; "Lubricant Additives" by M. W. Ranney, Noyes Data Corporation, Park Ridge, N. J., U.S.A.

In certain of the typical aqueous systems of the invention, the functional additive is a sulfur or chlorosulfur extreme pressure agent, known to be useful in oil-base systems. Such materials include chlorinated aliphatic hydrocarbons, such as chlorinated wax; organic sulfides and polysulfides, such as benzyl-disulfide, bis-(chlorobenzyl)disulfide, dibutyl tetrasulfide, sulfurized sperm oil, sulfurized methyl ester of oleic acid, sulfurized alkylphenol, sulfurized dipentene, sulfurized terpene, and sulfurized Diels-Alder adducts; phosphosulfurized hydrocarbons, such as the reaction product of phosphorus sulfide with turpentine or methyl oleate; phosphorus esters such as the dihydrocarbyl and trihydrocarbyl phosphites, i.e., dibutyl phosphite, diheptyl phosphite, dicyclohexyl phosphite, pentylphenyl phosphite, dipentylphenyl phosphite, tridecyl phosphite, distearyl phosphite and polypropylene substituted phenol phosphite; metal thiocarbamates, such as zinc dioctyldithiocarbamate and barium heptylphenol dithiocarbamate; and Group II metal salts of phosphorodithioic acid, such as zinc dicyclohexyl phosphorodithioate, and the zinc salts of a phosphorodithioic acid.

The functional additives can also be a film former such as a synthetic or natural latex or emulsion thereof in water. Such latexes include natural rubber latexes and polystyrene butadienes synthetic latex.

The functional additive can also be an anti-chatter or anti-squawk agent. Examples of the former are the amide metal dithiophosphate combinations such as disclosed in West German Patent 1,109,302; amine salt-azomethine combinations such as disclosed in British Patent Specification 893,977; or amine dithiophosphate such as disclosed in U.S. Patent 3,002,014. Examples of anti-squawk agents are N-acylsarcosines and derivatives thereof such as disclosed in U.S. Patents 3,156,652 and 3,156,653; sulfurized fatty acids and esters thereof such as disclosed in U.S. Patents 2,913,415 and 2,982,734; and esters of dimerized fatty acids such as disclosed in U.S. Patent 3,039,967.

Specific examples of functional additives useful in the aqueous compositions of this invention include the following commercially available products.

TABLE I

| Functional Additive Tradename | Chemical Description | Supplier |
|---|---|---|
| Anglamol 72 | Chlorosulfurized hydrocarbon | Lubrizol[1] |
| Anglamol 75 | Zinc dialkyl phosphate | Lubrizol[2] |
| Molyvan L | A thiaphosphomolybdate | Vanderbilt[2] |
| Lubrizol-5315 | Sulfurized cyclic carboxylate ester | Lubrizol[1] |
| Emcol TS 230 | Acid phosphate Ester | Witco[3] |

1 The Lubrizol Corporation, Wickliffe, Ohio, U.S.A.
2 R. T. Vanderbilt Company, Inc., New York, N,Y., U.S.A.
3 Witco Chemical Corp., Organics Division, Houston, Texas, U.S.A.

Mixtures of two or more of any of the afore-described functional additives can also be used.

Typically, a functionally effective amount of the functional additive is present in the aqueous systems of this invention. For example, if the functional additive is intended to serve primarily as a load-carrying agent, it is present in a load-carrying amount.

The aqueous compositions of this invention often contain at least one inhibitor for corrosion of metals. These inhibitors can prevent corrosion of either ferrous or non-ferrous metals (e.g., copper, bronze, brass, titanium, aluminum and the like) or both. The inhibitor can be organic or inorganic in nature. Usually, it is sufficiently soluble in water to provide a satisfactory inhibiting action though it can function as a corrosion-inhibitor without dissolving in water, it need not be water-soluble. Many suitable inorganic inhibitors useful in the aqueous systems of the present invention are known to those skilled in the art. Included are those described in "Protective Coatings for Metals" by Burns and Bradley, Reinhold Publishing Corporation, Second Edition, Chapter 13, pages 596-605. Specific examples of useful inorganic inhibitors include alkali metal nitrites, sodium di- and tripolyphosphate, potassium and dipotassium phosphate, alkali metal borate and mixtures of the same. Many suitable organic inhibitors are known to those of skill in the art. Specific examples include hydrocarbyl amine and hydroxy-substituted hydrocarbyl amine neutralized acid compound, such as neutralized phosphates and hydrocarbyl phosphate esters, neutralized fatty acids (e.g., those having about 8 to about 22 carbon atoms), neutralized aromatic carboxylic acids (e.g., 4-tert-butyl benzoic acid), neutralized naphthenic acids and neutralized hydrocarbyl sulfonates. Mixed salt esters of alkylated succinimides are also useful. Particularly useful amines include the alkanol amines such as ethanolamine and diethanolamine. Mixtures of two or more of any of the aforedescribed corrosion inhibitors can also be used. The corrosion inhibitor is usually present in concentrations in which they are effective in inhibiting corrosion of metals with which the aqueous composition comes in contact.

The aqueous compositions of the present invention (particularly those that are used in cutting or shaping of metal) can also contain at least one polyol with inverse solubility in water. Such polyols are those that become less soluble as the temperature of the water increases. They, thus, can function as surface lubricity agents during cutting or working operations since, as the liquid is heated as a result of friction between a metal workpiece and worktool, the polyol of inverse solubility "plates out" on the surface of the workpiece, thus, improving its lubricity characteristics.

The aqueous compositions of the present invention can also include at least one bactericide. Such bactericides are well known to those of skill in the art and specific examples can be found in the aforementioned McCutcheon publication "Functional Materials" under the heading "Antimicrobials" on pages 9-20 thereof. This disclosure relates to suitable bactericides for use in the aqueous compositions or systems of this invention. Generally, these bactericides are water-soluble, at least to the extent to allow them to function as bactericides.

The aqueous compositions of the present invention can also include such other materials as dyes, e.g., an acid green dye; water softeners, e.g., ethylene diamine tetraacetate sodium salt or nitrilo triacetic acid; odor masking agents, e.g., citronella, oil of lemon, and the like; and anti-foamants, such as the well-known silicone anti-foamant agents.

The aqueous compositions of this invention may also include an anti-freeze additive where it is desired to use the composition at a low temperature. Materials such as ethylene glycol and analogous polyoxyalkylene polyols can be used as anti-freeze agents. Clearly, the amount used will depend on the degree of anti-freeze protection desired and will be known to those of ordinary skill in the art.

It should also be noted that many of the ingredients described above for use in making the aqueous compositions of this invention are industrial products which exhibit or confer more than one property on

such aqueous systems. Thus, a single ingredient can provide several functions thereby eliminating or reducing the need for some other additional ingredient. Thus, for example, an extreme pressure agent such as tributyl tin oxide can also function as a bactericide.

While the invention has been explained in relation to its preferred embodiments, it is to be understood that various modifications thereof will become apparent to those skilled in the art upon reading the specification.

## Claims

**1.** A method of preparing an oil-soluble, metal-containing high torque, extreme pressure agent for a lubricating composition which comprises reacting

(A) a compound of the formula ROH, wherein R is an aliphatic group containing from 3 carbon atoms up to about 50 carbon atoms with

(B) a sulfur-free, phosphorus-containing agent to form an intermediate, and then further reacting said intermediate with

(C) an oxide or hydroxide, or a combination of an oxide and hydroxide of a metal selected from alkaline earth metals, tin, silicon, boron, zinc, molybdenum, manganese, nickel, cobalt, copper, titanium, vanadium, tungsten, zirconium and iron in the presence of

(D) a catalytically effective amount of a proton source selected from carboxylic acids containing up to 4 carbon atoms,

nitrogen-containing acids, sulfur-containing acids, halogen acids, water and mixtures thereof.

**2.** A method according to claim 1, wherein said phosphorus-containing agent is selected from phosphorus pentoxide, phosphorus halide, phosphorus oxyhalide, and elemental phosphorus with an oxidation source.

**3.** A method according to claim 1 or claim 2, wherein said alkaline earth metal is magnesium.

**4.** A method according to claim 1 or claim 2, wherein said metal is zinc.

**5.** A method according to any preceding claim, wherein the molar ratio of (A):(B) is 1:0.5 to 5:1.

**6.** A method according to any preceding claim, wherein the reaction of (A) and (B) is conducted at a temperature from ambient to the decomposition temperature of any reactant or product.

**7.** A method according to any preceding claim, wherein the ratio of said intermediate to (C) is 1 equivalent of phosphorus: 0.25-2 equivalents of component (C).

**8.** A method according to any preceding claim, wherein the reaction of said intermediate with (C) is conducted at a temperature from ambient to the decomposition temperature of any reactant or product.

**9.** A method according to any preceding claim, wherein said R is an isooctyl group, said phosphorus-containing agent is phosphorus pentoxide, the metal-containing compound (C) is zinc oxide, and said proton source is acetic acid.

**10.** An additive concentrate comprising a substantially inert, normally liquid organic solvent/diluent and 10-90% by weight of a composition prepared by a method according to any preceding claim.

**11.** A lubricating composition comprising a major amount of an oil of lubricating viscosity and a minor amount of a composition prepared by a method according to any one of claims 1 to 9.

**12.** A fuel composition comprising a major amount of a normally liquid fuel and a minor amount of a composition prepared by a method according to any one of claims 1 to 9.

**13.** An aqueous composition comprising water and a composition prepared by a method according to any one of claims 1 to 9.

## Patentansprüche

1. Verfahren zur Herstellung eines öllöslichen, metallhaltigen Hochmoment-Extremdruckmittels für ein Schmiermittel, umfassend die Umsetzung von
   (A) einer Verbindung der Formel ROH, in der R einen aliphatischen Rest mit 3 Kohlenstoffatomen bis zu etwa 50 Kohlenstoffatomen bedeutet, mit
   (B) einem schwefelfreiem, phosphorhaltigem Mittel unter Herstellung eines Zwischenprodukts und anschließend weitere Umsetzung des Zwischenprodukts mit
   (C) einem Oxid oder Hydroxid oder einer Kombination aus einem Oxid und einem Hydroxid eines Metalls, ausgewählt aus Erdalkalimetallen, Zinn, Silicium, Bor, Zink, Molybdän, Mangan, Nickel, Kobalt, Kupfer, Titan, Vanadin, Wolfram, Zirkonium und Eisen in Gegenwart von
   (D) einer katalytisch wirksamen Menge einer Protonenquelle, ausgewählt aus Carbonsäuren mit bis zu 4 Kohlenstoffatomen, stickstoffhaltigen Säuren, schwefelhaltigen Säuren, Halogensäuren, Wasser und Gemischen davon.

2. Verfahren nach Anspruch 1, wobei das phosphorhaltige Mittel ausgewählt ist aus Phosphorpentoxid, Phosphorhalogenid, Phosphoroxyhalogenid und elementarem Phosphor mit einer Oxidationsquelle.

3. Verfahren nach Anspruch 1 oder Anspruch 2, wobei das Erdalkalimetall Magnesium ist.

4. Verfahren nach Anspruch 1 oder 2, wobei das Metall Zink ist.

5. Verfahren nach einem vorangehenden Anspruch, wobei das Molverhältnis von (A):(B) 1:0,5 bis 5:1 beträgt.

6. Verfahren nach einem vorangehenden Anspruch, wobei die Umsetzung von (A) und (B) bei einer Temperatur von Raumtemperatur bis zur Zersetzungstemperatur eines Reaktanten oder des Produkts durchgeführt wird.

7. Verfahren nach einem vorangehenden Anspruch, wobei das Verhältnis des Zwischenprodukts zu (C) 1 Äquivalent Phosphor : 0,25 bis 2 Äquivalente der Verbindung (C) beträgt.

8. Verfahren nach einem vorangehenden Anspruch, wobei die Umsetzung des Zwischenprodukts mit (C) bei einer Temperatur von Raumtemperatur bis zur Zersetzung eines Reaktanten oder des Produkts durchgeführt wird.

9. Verfahren nach einem vorangehenden Anspruch, wobei R eine Isooctylgruppe bedeutet, das phosphorhaltige Mittel Phosphorpentoxid ist, das metallhaltige Mittel (C) Zinkoxid ist und die Protonenquelle Essigsäure ist.

10. Additivkonzentrat, umfassend ein im wesentlichen inertes, normalerweise flüssiges organisches Lösungsmittel/Verdünnungsmittel und 10 bis 90 Gew.-% einer Zusammensetzung, hergestellt gemäß einem Verfahren eines vorangehenden Anspruchs.

11. Schmiermittel, umfassend eine Hauptmenge eines Öls mit Schmierviskosität und eine geringere Menge einer Zusammensetzung, hergestellt gemäß einem Verfahren nach einem der Ansprüche 1 bis 9.

12. Kraftstoffzusammensetzung, umfassend eine Hauptmenge eines normalerweise flüssigen Kraftstoffs und eine geringere Menge einer Zusammensetzung, hergestellt gemäß einem Verfahren nach einem der Ansprüche 1 bis 9.

13. Wäßrige Zusammensetzung, umfassend Wasser und eine Zusammensetzung, hergestellt gemäß einem Verfahren nach einem der Ansprüche 1 bis 9.

**Revendications**

1. Une méthode pour préparer un agent de pression extrême, soumis à des couples élevés, renfermant des métaux, soluble dans l'huile, destiné à une composition d'huile lubrifiante, méthode qui consiste à faire réagir:

(A) un composé de formule ROH, dans lequel R est un groupe aliphatique renfermant de 3 atomes de carbone jusqu'à environ 50 atomes de carbone avec

(B) un agent, exempt de soufre, renfermant du phosphore, afin de former un intermédiaire et ensuite à faire réagir ledit intermédiaire avec

(C) un oxyde ou un hydroxyde ou bien une combinaison d'oxyde et d'hydroxyde d'un métal choisi parmi les métaux alcalino-terreux, l'étain, le silicium, le bore, le zinc, le molybdène, le manganèse, le nickel, le cobalt, le cuivre, le titane, le vanadium, le tungstène, le zirconium et le fer en présence de

(D) une quantité efficace du point de vue catalytique d'une source protonique choisie parmi les acides carboxyliques renfermant jusqu'à 4 atomes de carbone, les acides renfermant de l'azote, les acides renfermant du soufre, les acides halogénés, l'eau et les mélanges de ceux-ci.

**2.** Une méthode selon la revendication 1, dans laquelle ledit agent renfermant du phosphore est choisi parmi le pentoxyde de phosphore, les halogénures de phosphore, les oxyhalogénures de phosphore, et le phosphore élémentaire avec une source oxydante.

**3.** Une méthode selon la revendication 1 ou la revendication 2, dans laquelle ledit métal alcalino-terreux est du magnésium.

**4.** Une méthode selon la revendication 1 ou la revendication 2, dans laquelle ledit métal est le zinc.

**5.** Une méthode selon l'une des revendications précédentes, dans laquelle le rapport molaire de (A):(B) est de 1:0,5 à 5:1.

**6.** Une méthode selon l'une quelconque des revendications précédentes, dans laquelle la réaction de (A) et (B) est mise en oeuvre à une température entre la température ambiante et la température de décomposition d'un quelconque des réactifs ou produits.

**7.** Une méthode selon l'une des revendications précedentes, dans laquelle le rapport dudit intermédiaire à (C) est 1 équivalent de phosphore: 0,25-2 équivalents de composant (C).

**8.** Une méthode selon l'une quelconque des revendications précédentes, dans laquelle la réaction dudit intermédiaire avec (C) est mise en oeuvre à une température entre la température ambiante et la température de décomposition de l'un quelconque des réactifs ou produits.

**9.** Une méthode selon l'une quelconque des revendications précédentes, dans laquelle ledit R est un groupe isooctyle, ledit agent renfermant du phosphore et du pentoxyde de phosphore, le composé renfermant du métal (C) est l'oxyde de zinc, et ladite source protonique est l'acide acétique.

**10.** Un concentré d'addition comportant un agent solvant/diluant organique, liquide sous les conditions normales et pratiquement inerte et de 10 à 90% en poids d'une composition préparée par une méthode selon l'une quelconque des revendications précédentes.

**11.** Une composition lubrifiante comportant une quantité prépondérante d'une huile de viscosité lubrifiante et une quantité plus faible d'une composition préparée par une méthode selon l'une quelconque des revendications 1 à 9.

**12.** Une composition de carburant comportant une quantité prédominante d'un carburant liquide sous les conditions normales et une quantité plus faible d'une composition préparée par une méthode selon l'une quelconque des revendications 1 à 9.

**13.** Une composition aqueuse comportant de l'eau et une composition préparée par une méthode selon l'une quelconque des revendications 1 à 9.